# EUROPEAN PATENT APPLICATION

(11) **EP 0 942 555 A2**
(43) Date of publication of application: **15.09.1999**
(21) Application number: 99103593.2
(22) Date of filing: 24.02.1999
(51) Int. Cl.: H04L 12/40

(54) **Communication system and communication control method for realizing reliable communication using a dual bus**

(30) Priority: 24.02.1998 JP 4234798; 25.02.1998 JP 4313298; 27.02.1998 JP 4730998; 27.02.1998 JP 4731098
(71) Applicant: Yokogawa Electric Corporation, Tokyo 180-8750 (JP)
(72) Inventor: Hayashi, Shunsuke c/o Yokogawa Electric Corp., Musashino-shi, Tokyo 180-8750 (JP); Matsukawa, Hideo c/o Yokogawa Electric Corp., Musashino-shi, Tokyo 180-8750 (JP); Yokoi, Toyoaki c/o Yokogawa Electric Corp., Musashino-shi, Tokyo 180-8750 (JP)
(74) Representative: Henkel, Feiler, Hänzel

(57) **Abstract**

The present invention contains the following features [1] to [5]:
[1] A master station (100) and a slave station (500) are connected using two redundant buses (151,171,152,172). Command frames having the same content are sent out to the buses and the communication process is changed depending on whether or not the contents of these command frames when received by a receiving station are identical.
[2] A plurality of units is connected to each bus in a multidrop configuration. The line length of the buses is defined so that reflected signals from other units reach a receiving unit on the buses after the transition period of a received signal at that receiving unit ends.
[3] A unit is connected to each bus and the unit is provided with a driver IC. Transmission data is first encoded into bit signals having a fixed number of bit 1's, then the signals are supplied to the driver Ic.
[4] A plurality of strobe signals is generated at different timings in a transmitter circuit. As many latch circuits as the number of strobe signals are provided in a receiver circuit so that data is retained in each latch circuit using the strobe signals, one at a time.
[5] In cases where a bus master wants to use a data bus again after it has finished using the data bus, an examination is carried out in order to check if arbitration has been carried out using an arbitration bus thereafter.
If no arbitration has been carried out, the arbitration procedure using the arbitration bus is skipped and the bus master is permitted to acquire the right to use the data bus.

## Description

### [Background of the Invention]

### 1. Field of Invention

The present invention relates to a communication system and a communication control method wherein stations are connected to buses to communicate with each other through the buses.

### 2. Description of the Prior Art

In a computing system, the whole circuitry of a system is typically divided into CPU sections, storage unit sections, input/output interface sections, and so on, and a plurality of printed wire boards comprising these sections is installed in the system. These printed wire boards are interconnected by connecting between connectors attached to the boards through a bus. A board provided with connectors and a bus is generally called a backplane. A communication system is built using a backplane to enable printed wire boards in the system to communicate with each other. The prior art and its problems found in a communication system where backplanes were adopted are described separately in the following paragraphs (a) to (e).

### (a) Prior Art and Problems Associated with It

In a communication system comprising master and slave stations, a bus connecting between the stations is often duplicated in order to increase communication reliability.

In such a dual-redundant bus system, the two redundant buses are used alternately as long as both buses are normal. If one of the buses fails, the other normal bus is used to continue communication.

Meanwhile, concurrent communication is carried out in order to check periodically whether or not the failed bus has recovered.

Another problem with the above-mentioned example of the prior art is that master-slave communication does not take place unless a processor in a master station is aware of the status of the redundant buses.

More specifically, the processor must be aware of which of the two redundant buses is the active bus or the standby bus.

Yet another problem is that control must be carried out to switch from one bus to the other when either of them fails.

Yet another problem is that the integrity of transferred data is checked by adding check bits to the data. Although this check using check bits can examine the integrity of data on the bus, it cannot examine the integrity of data in areas other than the bus, such as bus interfaces, bridges and repeaters.

### (b) Prior Art and Problems Associated with It

In communication systems, there are various reasons why the waveform of a bus signal may become distorted, as described in the following paragraphs.

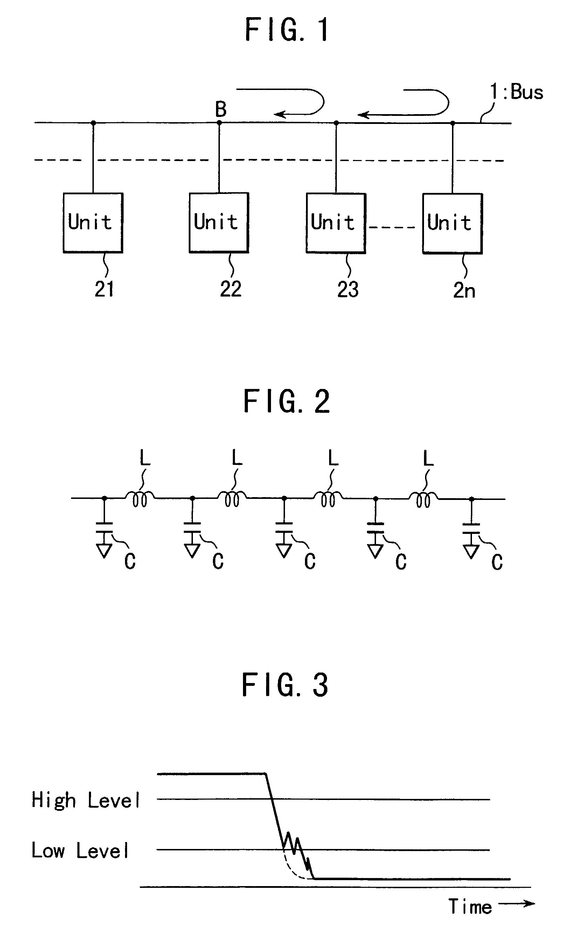

Figure 1 is a schematic representation showing an example of the configuration of a conventional communication system.

Referring to Figure 1, a plurality of units 21 to 2n is connected to a bus 1 in a multidrop configuration. The units 21 to 2n communicate with each other through the bus.

Figure 2 is the equivalent circuit of the bus 1.

As shown in Figure 2, the bus 1 has its own inductance L and stray capacitance C.

When any of the units is connected to the bus, the circuit impedance decreases because of the capacitance component of the unit itself.

Accordingly, a signal transferred through the bus to the unit reflects at points where other units are connected.

For example, if a signal is sent from the unit 21 to the unit 22 in Figure 1, reflected signals occur at the connection points of the units 22 to 2n.

Figure 3 shows the waveform of a signal at point B. Signals reflected by the units 23 to 2n reach point B before the signal received by the unit 22 changes from a high-level state to a low-level state. As a result, the reflected signals from the units 23 to 2n are superposed with the received signal, as shown in Figure 3, thus increasing the degree of waveform distortion. This may cause the receiving unit 22 to malfunction. In the example in Figure 3, the magnitude of the superposed reflected signals exceeds the low-level threshold.

In order to avoid this problem, the following restrictions are applied in the prior art.
· Special devices having low capacitance should be used with units.
· The number of connected units should be reduced.

It is required to control the effects of such reflected signals without being subject to these restrictions.

### (c) Prior Art and Problems Associated with It

The following paragraph describes other reasons why the waveform of a bus signal may become distorted.

In a communication system, the transmitter circuit of a unit is provided with a driver IC that sends out signals to a bus. If any one bit, among the bits input to the driver IC, is kept static and all other bits are switched at the same time, the ground potential of the driver IC increases. This phenomenon is known as ground bounce; noise may be induced at the static bit due to the effects of the ground bounce. This noise is known as simultaneous switching noise; faulty data may be transferred due to the simultaneous switching noise.

Once the ground bounce occurs, it takes some time for the ground potential to return to zero. This results in an increase in the communication delay time.

For these reasons, it is required to reduce the effects of the ground bounce.

### (d) Prior Art and Problems Associated with It

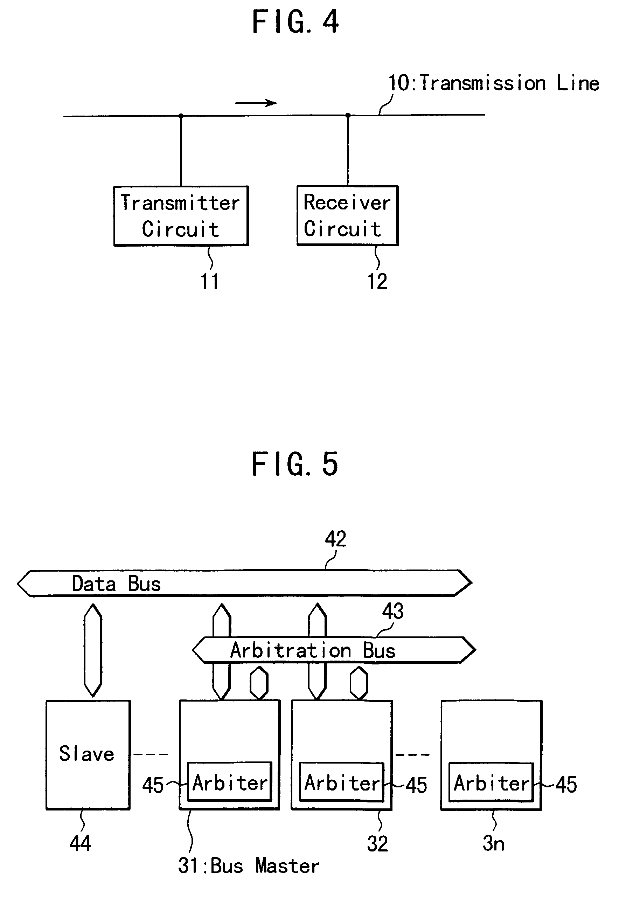

Figure 4 is a schematic configuration of a standard communication system.

In Figure 4, a transmitter circuit 11 and a receiver circuit 12 are connected to a transmission line 10 that constitutes a bus. Data is transferred from the transmitter circuit 11 to the receiver circuit 12 through the transmission line 10.

In the communication system described above, the transmitter circuit 11 and the receiver circuit 12 operate on asynchronous clocks having different phases. Before any signal transfer can be carried out in the communication system, data transmitted using the clock in the transmitter circuit must be somehow synchronized with the clock in the receiver circuit.

If data needs to be transferred using start-stop synchronization that transmits data only, this synchronization is achieved by using a clock faster than the data transfer rate for the receiver circuit to sample the data. Normally, as a high-speed clock, a clock having a frequency approximately 16 times the data transfer rate is used.

If data needs to be transferred using clock synchronization that sends data together with a clock signal, this synchronization is achieved by writing the data once into a FIFO circuit in the receiver circuit using the transmitted clock signal, and then reading the data from the FIFO circuit using the clock in the receiver circuit.

In data transfer based on start-stop synchronization, the receiver circuit must be provided with a clock that operates at speeds higher than the data transmission rate. As a result, the data transmission rate must be lower than the frequency of the clock available for the receiver circuit. For this reason, high-speed signal transfer has been difficult to achieve.

In data transfer based on clock synchronization, the data is once written into a FIFO circuit in the receiver circuit using the transmitted clock signal. For this reason, faulty data may be written into the FIFO circuit if the waveform of a received clock signal is distorted. The waveforms of signals that propagate between circuits connected to a transmission line that constitutes a bus are distorted due to the capacitive load of the transmission line or the effects of noise that enters the transmission line. This makes it difficult to achieve high-speed, consistent signal transfer.

### (e) Prior Art and Problems Associated with It

In a communication system where two or more bus masters share the same system resources, such as storage units, through a common bus, requests from the respective bus masters to use the bus may fall into contention. If this happens, some means of control must be used to decide which bus master should use the bus first. Bus arbitration is carried out for this purpose.

Figure 5 is an example of the schematic configuration of the conventional communication system.

In Figure 5, bus masters 31 to 3n are connected to a data bus 42 and an arbitration bus 43. A slave 44 is, for example, a storage unit and is connected to the data bus 42. An arbiter 45 is incorporated in each of the bus masters 31 to 3n. The arbiter 45, after having gone through an arbitration procedure using the arbitration bus 43, permits the bus master, which has acquired the right to use the data bus 42, to do so.

The bus master that has acquired the right to use the data bus 42 gains access to the slave 44.

Figure 6 is a schematic representation showing the behavior of the conventional communication system shown in Figure 5.

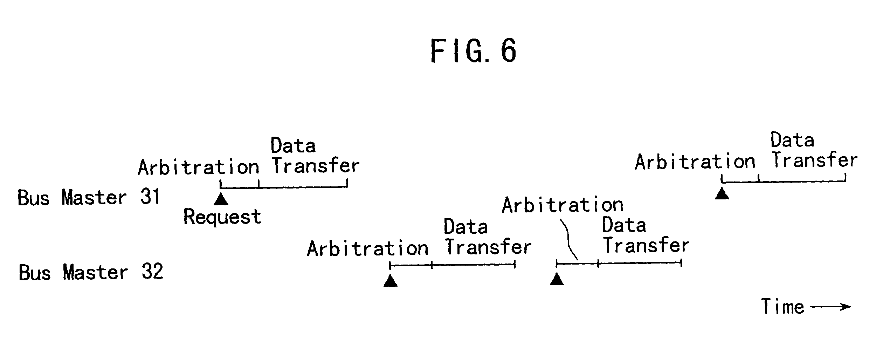

In the example shown in Figure 6, bus masters 31 and 32 acquire the right to use a data bus 42 in succession in the order of the bus master 31 then 32 and 32 then 31. In this process, an arbitration action using an arbitration bus 43 takes place each time the right of use is acquired.

In this example of the conventional communication system, however, when a bus master that has acquired the right of use wants to use the data bus again in succession, the arbitration action also takes place even if no other bus master requests use of the data bus. In the example shown in Figure 6 where the bus master 32 uses the data bus in two consecutive rounds, the arbitration action takes place each time the bus master acquires the right of use. This method of arbitration involves a waste of time and leads to the problem of system performance degradation. The amount of wasted time increases especially when one particular bus master alone uses the data bus very often.

As described above, there have been various problems with conventional communication systems.

### [Summary of the Invention]

The present invention is intended to avoid the problems described in paragraphs (a) to (e) above. Accordingly, it is an object of the present invention to provide a communication system and communication control method whereby communication can be carried out without being aware of the state of a dual-redundant bus; the integrity of data in areas other than the bus can also be examined; and high-speed, highly reliable communication can be achieved.

### [Brief Description of Drawings]

### [Figure 1]

Figure 1 is the schematic configuration of an example of a conventional communication system.

### [Figure 2]

Figure 2 is the equivalent circuit diagram of the bus shown in Figure 1.

### [Figure 3]

Figure 3 is the schematic waveform of a signal observed at point B.

### [Figure 4]

Figure 4 is the schematic configuration of a standard communication system.

### [Figure 5]

Figure 5 is an example of the schematic configuration of a conventional communication system.

### [Figure 6]

Figure 6 is a schematic representation showing the behavior of the example of the conventional communication system shown in Figure 5.

### [Figure 7]

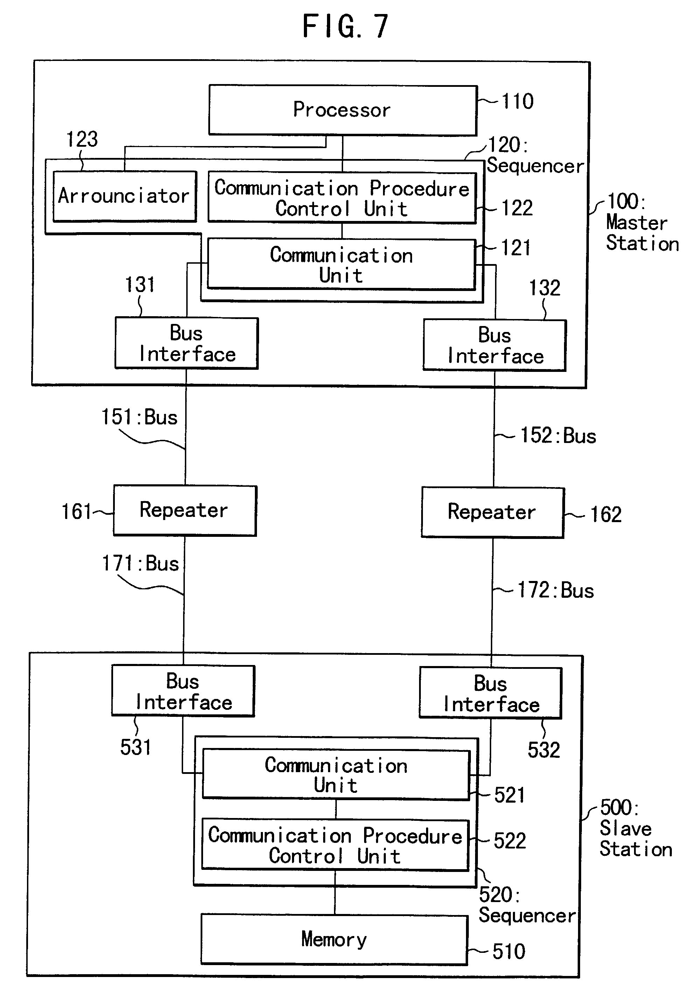

Figure 7 is a schematic configuration of one embodiment of the present invention.

### [Figure 8]

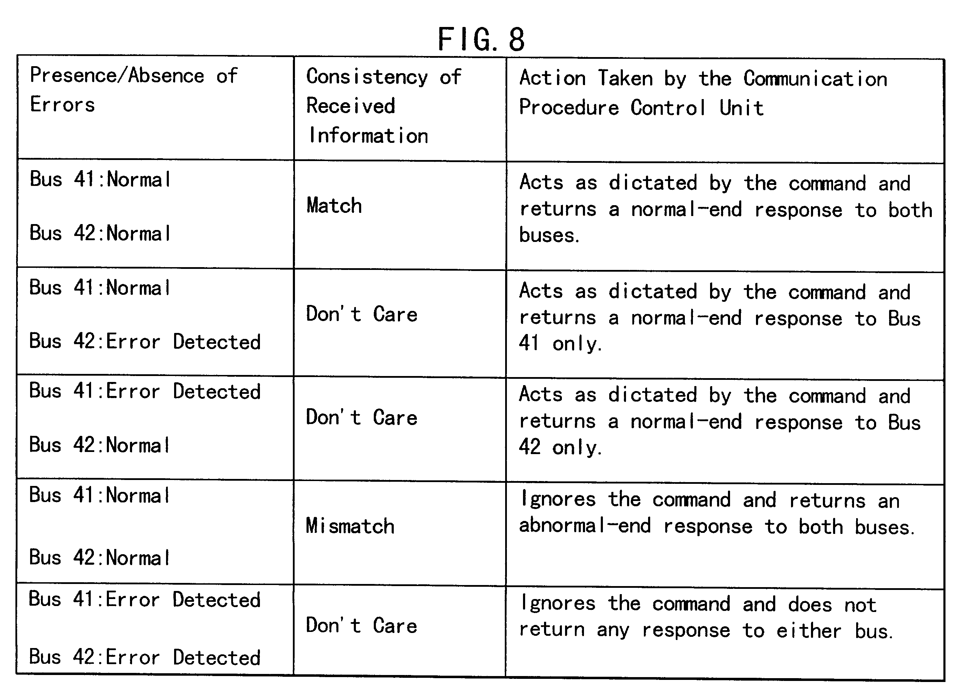

Figure 8 is a schematic representation showing the behavior of the communication procedure control unit shown in Figure 7.

### [Figure 9]

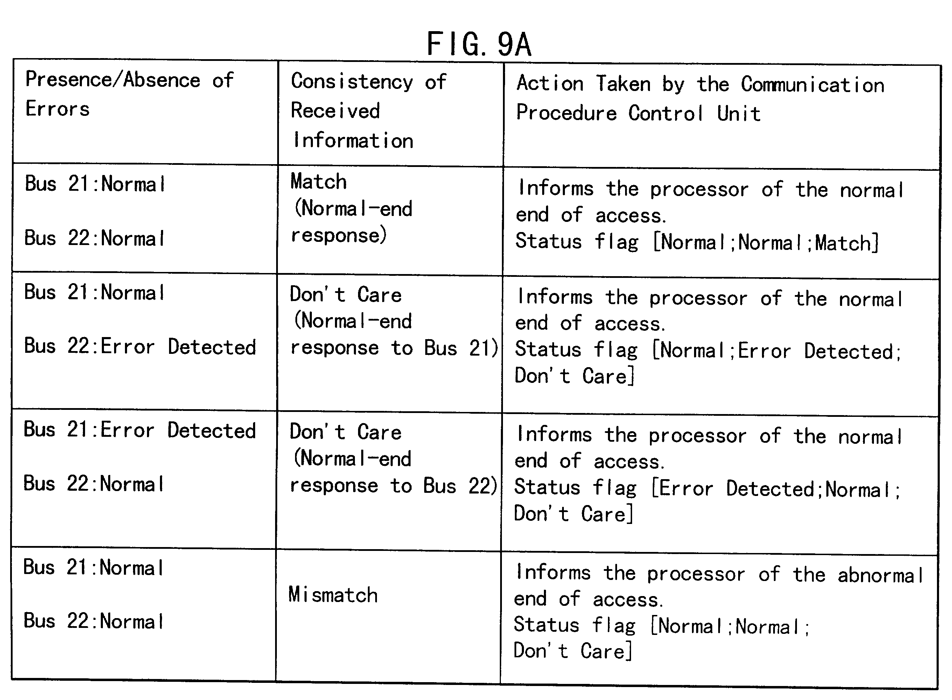

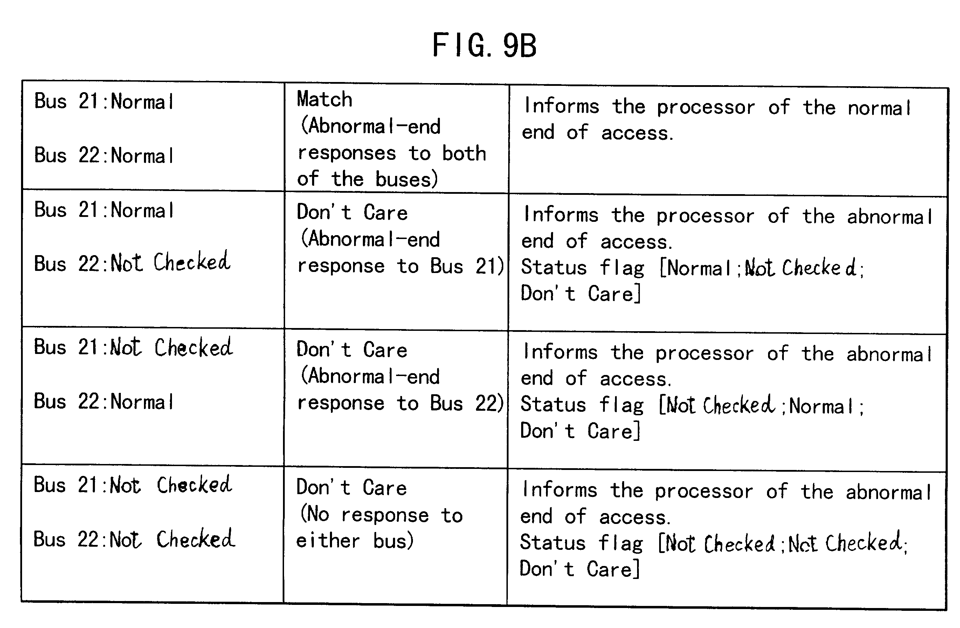

Figure 9 is another schematic representation showing the behavior of the communication procedure control unit shown in Figure 7.

### [Figure 10]

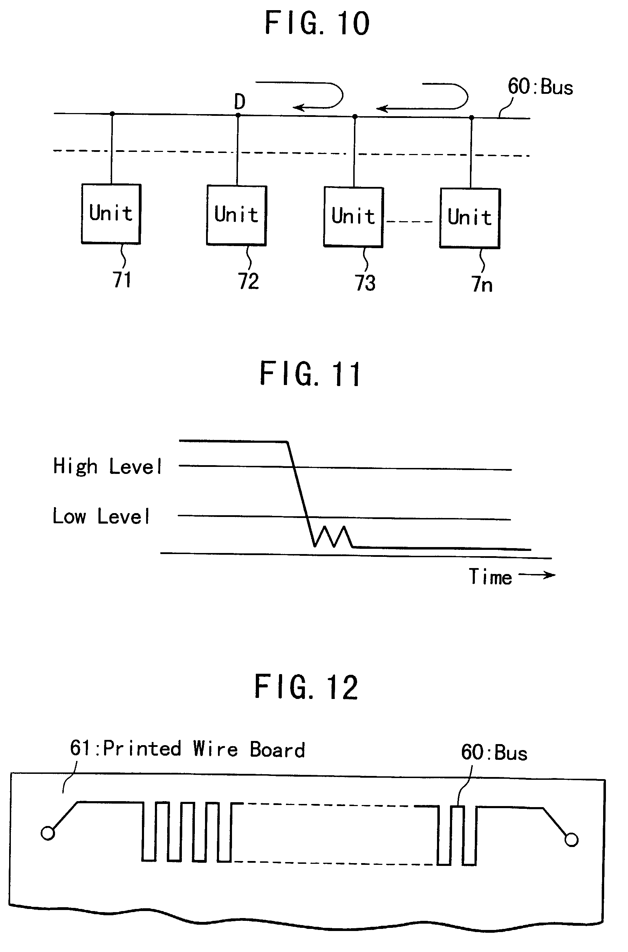

Figure 10 is a schematic configuration of another embodiment of the present invention.

### [Figure 11]

Figure 11 is the schematic waveform of a signal observed at point D.

### [Figure 12]

Figure 12 is a schematic representation showing an example of the configuration of the bus shown in Figure 10.

### [Figure 13]

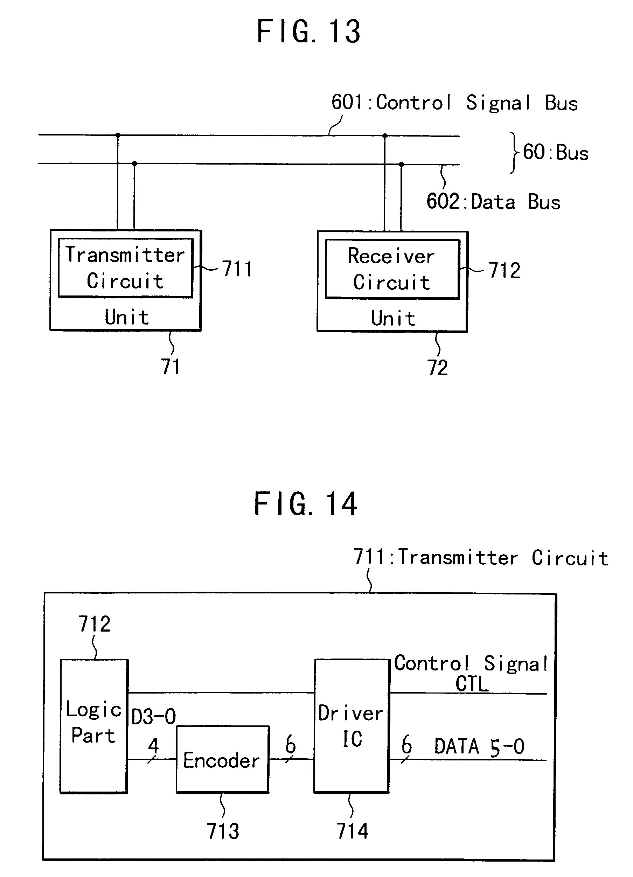

Figure 13 is a schematic representation showing the configuration of yet another embodiment of the present invention.

### [Figure 14]

Figure 14 is a schematic representation showing an example of the configuration of the transmitter circuit shown in Figure 13.

### [Figure 15]

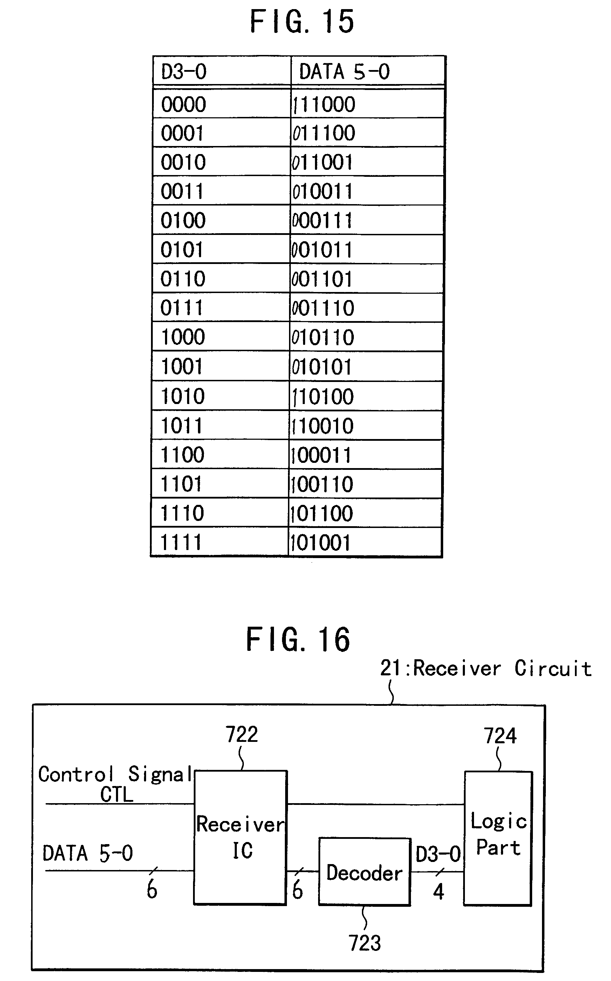

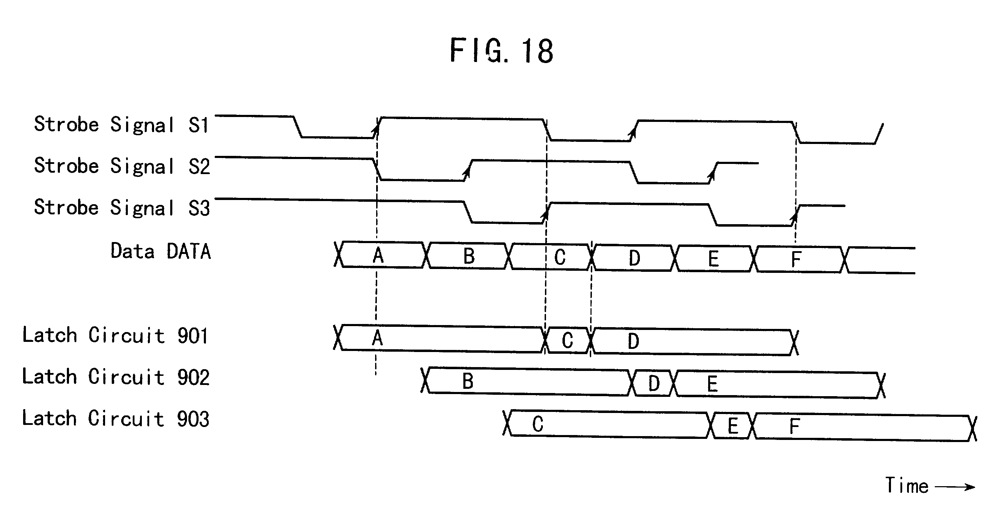

Figure 15 is a schematic example of a conversion table for coding.

### [Figure 16]

Figure 16 is a schematic representation showing an example of the configuration of the receiver circuit shown in Figure 13.

### [Figure 17]

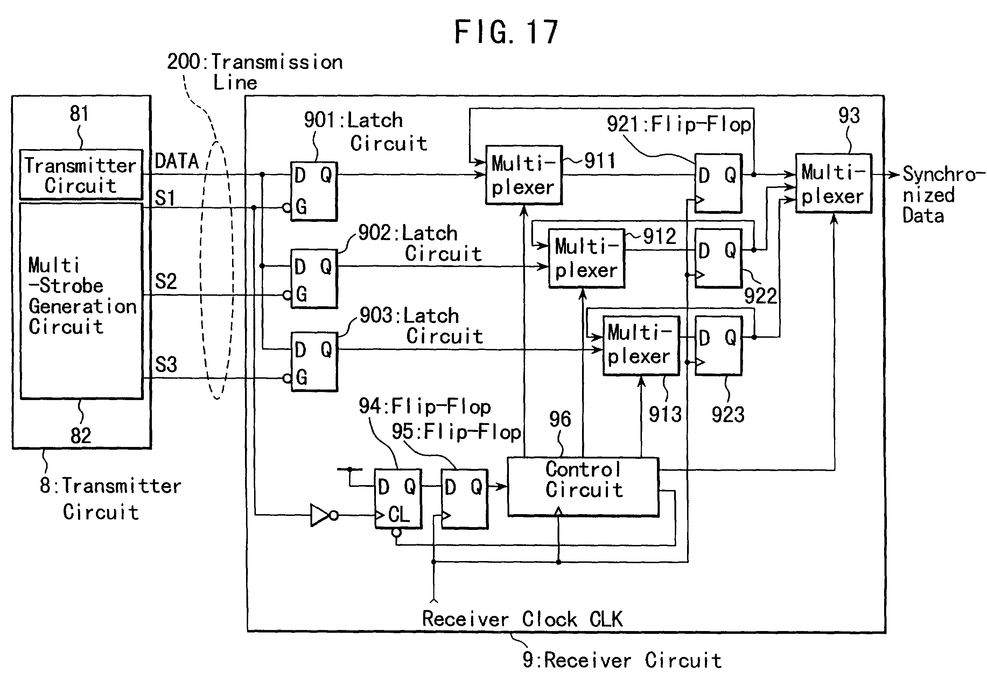

Figure 17 is a schematic representation showing the configuration of yet another embodiment of the present invention.

### [Figure 18]

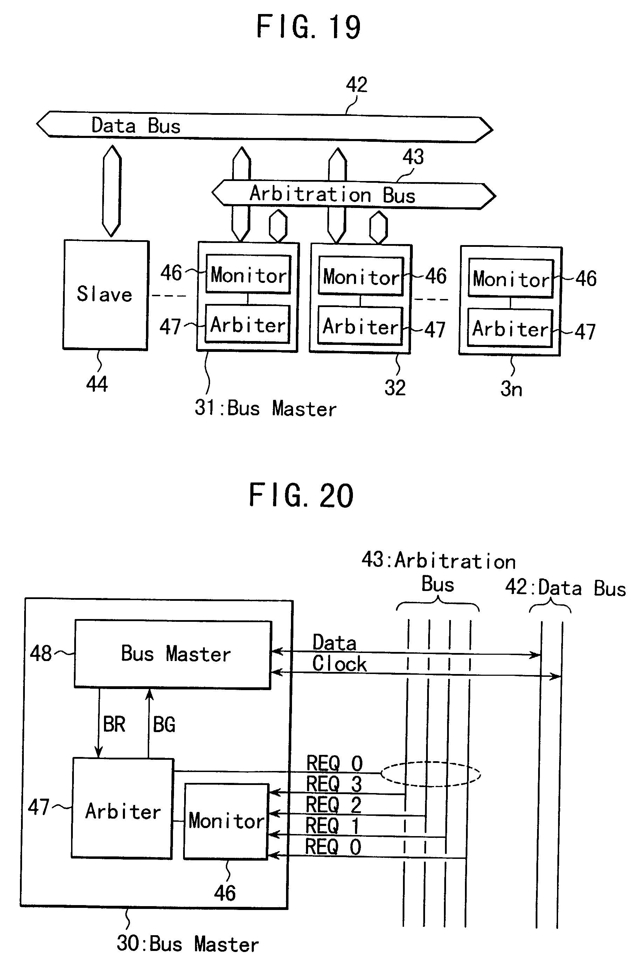

Figure 18 is the timing chart of signals used in the example of the embodiment shown in Figure 17.

### [Figure 19]

Figure 19 is a schematic configuration of yet another embodiment of the present invention.

### [Figure 20]

Figure 20 is a schematic configuration of the main part of the embodiment of Figure 19.

### [Figure 21]

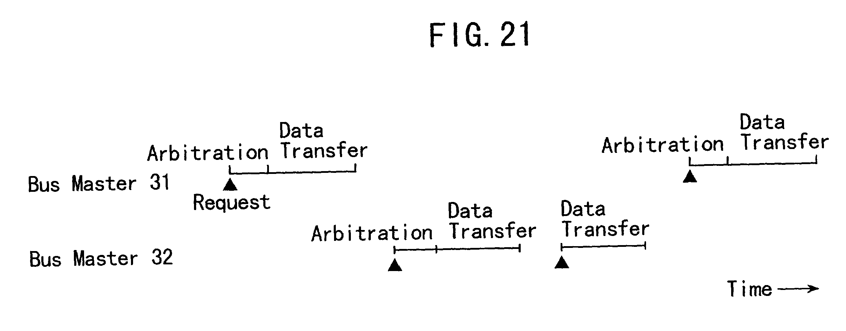

Figure 21 is a schematic representation showing the operation of the embodiment of Figure 19.

### [Description of the Preferred Embodiments]

The present invention is described below using the accompanying drawings.

Embodiments 1 to 5 described below are those of communication systems that are free from the problems discussed in paragraphs (a) to (e).

Embodiments 1 to 5 are described separately in paragraphs (1) to (5).

### (1) Embodiment 1

Figure 7 is a schematic representation showing the configuration of one embodiment of the present invention.

In Figure 7, two redundant buses 151 and 152 are connected to a master station 100. Buses 151 and 152 are connected to two redundant buses 171 and 172 through relay equipment 161 and 162, respectively. The buses 171 and 172 are connected to a slave station 500. The relay equipment 161 and 162, for example, are bridges or repeaters.

The relay equipment 161 and 162 may be excluded from this embodiment.

In that case, buses 151 and 152 are identical to buses 171 and 172.

In a master station 100, a processor 110 controls the master station as a whole. A sequencer 120 is connected to buses 151 and 152 through bus interfaces 131 and 132. The sequencer 120 is provided with a communication unit 121, a communication procedure control unit 122 and an annunciator 123, the behavior of which are described later.

In a slave station 500, a subordinate unit 510 is a device that operates under the command and control of a master station 100 and is memory in the example shown in Figure 7. A sequencer 520 is connected to buses 171 and 172 through bus interfaces 531 and 532. The sequencer 520 is provided with a communication unit 521 and a communication procedure control unit 522, the behavior of which are described later.

The behavior of the communication control system in Figure 7 is described as follows.

The communication unit 121 in the sequencer 120 simultaneously sends out two command frames having the same content to the buses 151 and 152. The command frames contain added test bits. The transmitted command frames travel through the buses 151 and 152, relay equipment 161 and 162, then buses 171 and 172 to reach the slave station 500.

At the slave station 500, the communication unit 521 receives the command frames. Then, the communication procedure control unit 522 processes the received command frames.

Figure 8 is a schematic representation showing the behavior of the communication procedure control unit 522.

The communication procedure control unit 522 performs a test of valid data transfer using check bits on the contents of the two command frames that the slave station receives through the buses 171 and 172, and examines whether or not the contents of the received two command frames match. The communication procedure control unit then executes the processes described below depending on the results of the test and examination. The received contents are checked for errors by, for example, means of a cyclic redundancy check (CRC).
[1] If command frames, which are judged to be normal by means of the check bits, are received through both buses and the contents of the received two command frames match, the communication procedure control unit acts as dictated by the command and returns normal-end responses having the same content to both buses.
[2] If a command frame, which is judged to be normal by means of the check bits, is received through either bus, the communication procedure control unit acts as dictated by the command and returns a normal-end response to only the bus that received the command frame.
[3] If command frames, which are judged to be normal by means of the check bits, are received through both buses but the contents of the received two command frames do not match, the communication procedure control unit ignores the contents of the commands and returns abnormal-end responses having the same content to both buses.
[4] If a command frame, which is judged to be normal by means of the check bits, is not received through either of the buses, the communication procedure control unit does not return any response to either of the buses.

In these processes, the notion "command frames, which are judged to be normal by means of the check bits, are received" means that the command frames are received and the results of examination using the check bits are normal.

Meanwhile, the communication unit 521 sends out response frames received from the communication procedure control unit 522 to the buses 171 and 172. The communication unit adds check bits to the response frames before it sends them out.

At the master station 100, the communication procedure control unit 122 monitors for responses from the slave station 500.

Figure 9 is a schematic representation showing the behavior of the communication procedure control unit 122.

The communication procedure control unit 122 monitors for responses from the slave station 500 and executes the processes described below depending on the results of monitoring.
[1] If response frames, which are judged to be normal by means of the check bits, are received through both buses and if they are normal-end responses whose contents match, the communication procedure control unit informs the processor 110 of the normal end of access.
[2] If a response frame, which is judged to be normal by means of the check bits, is received through either bus and if it is a normal-end response, the communication procedure control unit informs the processor 110 of the normal end of access.
[3] If response frames, which are judged to be normal by means of the check bits, are received through both buses but the contents of the received two response frames do not match; or
   If response frames, which are judged to be normal by means of the check bits, are received through both buses and if they are abnormal-end responses whose contents match; or
   If a response frame, which is judged to be normal by means of the check bits, is received through either bus and if it is an abnormal-end response;
   the communication procedure control unit informs the processor 110 of the abnormal end of access.
[4] If a response frame judged to be normal by means of the check bits is not received through either of the buses, the communication procedure control unit informs the processor 110 of the abnormal end of access.

The annunciator 123 informs the processor 110 which of the above-mentioned cases [1] to [4] the access to the slave station fell under before it ended.

The communication procedure control unit 122 sets a status flag that indicates the "state of the bus 171, state of the bus 172 and the conformity of received contents." The processor 110 checks the status flag when it diagnoses the states of buses.

The advantages offered by embodiment 1 are as follows:
[1] It is possible to separate data exchange from control of a dual-redundant bus. As a result, data exchange can be carried out between the master and slave stations without requiring the processor in the master station to be aware of the state of the dual-redundant bus during normal access.
[2] In a case where frames are received through both buses at either the master or slave station and both frames prove to be normal by examination using check bits, the frames are judged to be abnormal if their contents do not match. This method of examination makes it possible to check the integrity of the received contents of frames at functional components, such as bus interfaces and bridges, where errors could not be detected using check bits.

### (2) Embodiment 2

Figure 10 is a schematic representation showing the configuration of another embodiment of the present invention.

In Figure 10, a plurality of units from 71 to 7n is connected to a bus 60 in a multidrop configuration.

The line length of the bus 60 satisfies the following conditional formula.

### (Transition time of a transmission signal on bus 60) ≤ (Time required for the transmission signal to make a round trip between two units with the shortest communication path)

There is a backplane bus as one example of the bus 60.

In Figure 10, if a signal is sent from a unit 71 to a unit 72 for example, reflected signals are produced at the connections of the units 72 to 7n.

Figure 11 shows the schematic waveform observed at a point D. At the point D, the signal received by the unit 72 changes from a high-level state to a low-level state before signals reflected by the other units 73 to 7n reach the point D. As a result, as shown in the figure, the signals reflected by the units 73 to 7n never coincide with the transition of the signal received by the unit 72 and are independent of each other. This means the magnitude of superposed reflected signals never crosses the threshold of the low-level state and, therefore, the receiving unit 72 never malfunctions.

Figure 12 is a schematic representation showing an example of the configuration of the bus 60.

As shown in Figure 12, the bus 60 is structured in a zigzag wiring pattern on a printed wire board 61.

In accordance with embodiment 2 of the invention, the line length of the bus 60 is determined so that the transition time of a transmission signal on the bus is shorter than the time required for the transmission signal to make a round trip between any two of the units.

As a result, the transition time of a signal at any receiving unit passes before signals reflected by other units reach the receiving unit. The reflected signals are independent of each other, thus preventing the receiving unit from malfunctioning. This suppresses the effects of any reflected signal occurring on the bus.

Furthermore, since the bus is structured in a zigzag wiring pattern on a printed wire board, the overall line length of the bus can be increased by effectively using the narrow space of the board.

### (3) Embodiment 3

Figure 13 is a schematic representation showing the configuration of yet another embodiment of the present invention.

In Figure 13, a bus 60 consists of a control signal bus 601 and a data bus 602.

A unit 71 is provided with a transmitter circuit 711 and a unit 72 is provided with a receiver circuit 721.

Both the transmitter circuit 711 and the receiver circuit 721 may be incorporated in any single unit.

Figure 14 is a schematic representation showing one example of the configuration of the transmitter circuit 711.

In Figure 14, a logic part 712 outputs the control signal CTL and data D3-0. These are bit signals. In the example shown in the figure, data D3-0 is 4-bit data.

An encoder 713 encodes data sent by the logic part 712 into a bit signal having a fixed number of bit 1's. In the example shown in the figure, data D3-0, which is 4-bit data, is encoded into DATA4-0 which is 6-bit data.

Figure 15 is an example of a code conversion table.

An encoder 713 encodes data D3-0 into data DATA4-0 according to this table. Data DATA4-0 contains bit 1's whose quantity is fixed at either two or three.

Referring back to Figure 14, a driver IC 714 outputs the control signal CTL and data DATA4-0 to a bus 60.

At this point, the number of bit 1's contained in the data DATA4-0 supplied to the driver IC 714 remains fixed at either two or three even if the states of bits in data D3-0 change simultaneously while the states of bits in the control signal CTL are kept static. As a result, the effects of ground bounce are suppressed and the static bits of the control signal CTL are protected against induced noise.

Figure 16 is a schematic representation showing one example of the configuration of the receiver circuit 721.

In Figure 16, a receiver circuit 722 receives the control signal CTL and data DATA4-0 sent through the bus 60. A decoder 723 decodes data DATA4-0 back into data D3-0. As a result, the data transmitted by a transmitter circuit 711 is restored. A logic part 724 processes the control signal CTL and data D3-0.

The number of bits in data before and after coding and the number of bit 1's in data after coding may be other than those mentioned above.

In embodiment 3 of the present invention, transmission data is encoded into a bit signal having a fixed number of bit 1's before it is supplied to a driver IC. As a result, it is possible to reduce the effects of ground bounce.

### (4) Embodiment 4

Figure 17 is a schematic representation of the configuration of yet another embodiment of the present invention.

In Figure 17, a transmitter circuit 8 and a receiver circuit 9 are connected to a transmission line 200.

In the illustrated example, only one each of the transmitter circuit 8 and the receiver circuit 9 is shown for convenience of explanation, though the number of these circuits is not limited to that mentioned herein.

In the transmitter circuit 8, a transmitter circuit 81 sends out data DATA to a transmission line 200. A multi-strobe generation circuit 82 generates as many as N strobe signals (N is an integer) having different strobe timings onto a transmission line 200. In the illustrated example, the multi-strobe generation circuit generates three strobe signals, i.e., S1, S2 and S3.

The receiver circuit 9 is provided with as many latch circuits as the number of strobe signals. In the illustrated example, three latch circuits, i.e., latch circuits 901, 902 and 903, are provided. Data sent by the transmitter circuit 81 is successively retained in the latch circuits 901, 902 and 903, in this order, at the points in time of S1, S2 and S3, respectively. If there are N strobe signals, the receiver circuit is provided with as many latch circuits.

Outputs of the latch circuits 901, 902 and 903 are supplied to multiplexers 911, 912 and 913.

Flip-flops 921, 922 and 923 are supplied with selected outputs of the multiplexers 911, 912 and 913, respectively, and at the same time feed their own outputs back to the multiplexers.

A multiplexer 93 selects one of the outputs of the multiplexers 921, 922 and 923 to output it. This output serves as the synchronized data.

A flip-flop 94 is a circuit for detecting the starting point of communication and set as triggered by the rising edge of a strobe signal S1. A flip-flop 95 synchronizes the strobe signal S1 with the receiver clock CLK. The receiver clock CLK has the frequency equivalent to the transmission rate of data DATA.

A control circuit 96 receives the output of the flip-flop 95 and the receiver clock CLK to control the switching of the multiplexers 911, 912, 913 and 93 and resets the flip-flop 94 at the end of communication.

The multiplexers 911, 912, 913 and 93, the flip-flops 921, 922, 923, 94 and 95, and the control circuit 96 constitute a sampling circuit that samples data retained in the latch circuits 901, 902 and 903 using the receiver clock CLK having the frequency equivalent to the transmission rate of data DATA, in order to synchronize the data with the receiver clock.

The behavior of the embodiment of Figure 17 is described as follows.

Figure 18 is a signal timing chart for the embodiment of Figure 17.

As strobe signals, the embodiment is provided with three signals, i.e., S1, S2 and S3. The strobe signals are at a high level when no communication is carried out. The moment when a strobe signal changes from a low-level state to a high-level state is the time data is strobed.

A receiver circuit 8 drives data DATA and the three strobe signals, i.e., S1, S2 and S3, to transmit the data.

At a receiver circuit 9, latch circuits 901, 902 and 903 retain data DATA at the timings of strobe signals S1, S2 and S3.

In the example shown in Figure 18, data A, B and C are retained in the latch circuits 901, 902 and 903. The latch circuits 901, 902 and 903 continue to hold the same data until the strobe signals make the next state transition. For example, the latch circuit 901 retains data A and continues to hold it until strobe signal S1 changes to a low-level state.

The sampling circuit samples data retained by the latch circuits 901, 902 and 903 using the receiver clock CLK having the frequency equivalent to the data transmission rate of data DATA to synchronize the data with the receiver clock CLK. Although the receiver clock CLK is not synchronized with strobe signals S1, S2 and S3, the above-mentioned synchronization can still be achieved by sampling the data retained in the latch circuits 901, 902 and 903 using the receiver clock CLK before the data changes. For example, data A may be sampled using the receiver clock CLK while the latch circuit 901 is retaining the data. A frequency equivalent to the data transmission rate of data DATA is therefore enough for the receiver clock CLK to achieve the synchronization.

The advantages offered by embodiment 4 of the present invention are as follows.
[1] The transmitter circuit only has to send data using N strobe signals in sequence, one by one. As a result, the transmitter circuit can be implemented on virtually the same scale of integration as that of the conventional transmitter circuit.
[2] The receiver circuit is provided with N latch circuits in connection with N strobe signals to retain data at the activation of each of the strobe signals. Therefore, data retained in any of these latch circuits remains unchanged until the strobe signal allocated to that latch circuit makes the next state transition. As a result, the receiver clock used to sample data retained in the latch circuit can be out of phase and asynchronous with the transmitter clock. Moreover, a frequency equivalent to the data transmission rate is sufficient for the receiver clock. For this reason, the present invention does not require a high-speed clock, which is faster than the data transmission rate, such as that used for data transmission based on start-stop synchronization. As a result, it is unnecessary to reduce the transmission rate below the frequency of the clock provided in the receiver circuit, thus permitting high-speed communication.
[3] The flip-flops and control circuit for sampling in the receiver circuit are all designed to operate on the same receiver clock. That is, the receiver circuit does not contain any FIFO circuits or control circuits that operate by using received strobe signals as their clock.

Accordingly, the receiver circuit will not malfunction even if the strobe signals' waveforms become distorted due to the effects of a capacitive load or noise in the transmission line, thus ensuring consistent signal transfer.

As described herein according to embodiment 4 of the present invention, it is possible to realize high-speed, consistent signal transfer.

### (5) Embodiment 5

Figure 19 is a schematic representation of the configuration of yet another embodiment of the present invention.

In Figure 19, bus masters 31 to 3n are provided with a pair of a monitor 46 and an arbiter 47.

The monitor 46 monitors signals on an arbitration bus 43.

The arbiter 47, once a request to use the data bus is issued from the bus master to which the arbiter belongs, executes the following processes depending on the results of monitoring by the monitor 46.
[1] If no arbitration is carried out on the arbitration bus 43 after the bus master to which the arbiter belongs has finished using the data bus 42, the arbiter acquires the right to use the data bus without going through the arbitration procedure using the arbitration bus 43.
[2] If arbitration is carried out on the arbitration bus 43 after the bus master to which the arbiter belongs has finished using the data bus 42, the arbiter acquires the right to use the data bus after having gone through the arbitration procedure using the arbitration bus 43.

Figure 20 is a schematic representation of the main part of the embodiment of Figure 19.

A bus master 48 sends signal BR requesting to acquire the right to use the bus to an arbiter 47. When the bus master receives signal BG for informing acquisition of the right, it transmits data using a data bus 42.

The signal line of the arbitration bus 43 carries signals REQ3 to REQ0, which represent a request for the right to use the bus made by a bus master 30, as well as REQOUT signal. Signals REQ3 to REQ0 are input signals to the bus master 30 and REQOUT signal is an output signal from the bus master. Output REQOUT signal is supplied to the signal line of one of signals REQ3 to REQ0. Signals REQ3 to REQ0 are prioritized in the order of REQ0, REQ1, REQ2 and REQ3. The number of signal lines need not be limited to the quantity mentioned herein.

In this embodiment, arbitration is carried out according to the procedure described below.

### (A) Neutral State

If the bus master 30 is in a neutral state, there is no request from that bus master to use the bus. In this state, the data bus 42 or the output REQOUT signal is not driven from the bus master 30.

### (B) Transmission of Bus Request

If a request to use the bus arises, the bus master 30 makes its own REQOUT signal active without delay, after confirming that signals REQ3 to REQ0 on the arbitration bus 43 are inactive.

### (C) Wait for Bus Request Settlement

After sending out the REQOUT signal, the bus master 30 compares each of signals REQ3 to REQ0 on the arbitration bus 43 with its own REQOUT signal to find the order of priority, and then executes the following processes.
[1] If the bus master 30 finds that there is a signal, among REQ3 to REQ0 on the arbitration bus 43, that has a higher priority than its own REQOUT signal, then it temporarily withdraws its own REQOUT signal and enters a wait state.
[2] If the bus master 30 finds there is only the REQOUT signal of its own on the arbitration bus 43, then it measures the period over which that condition continues. As soon as the measured period reaches a specified value, the bus master acquires the right to use the data bus.
[3] If the bus master 30 finds that there is a signal, among REQ3 to REQ0 on the arbitration bus 43, that has a lower priority than its own REQOUT signal, then it enters a wait state with its own REQOUT signal held active. Thus, the bus master 30 waits until the signal having the lower priority disappears. As soon as the signal disappears, the bus master 30 returns to the condition described in item [2] above.

### (D) Use of Bus

Once the bus master 30 acquires the right to use the data bus, the bus master 48 transfers data using the data bus 42. While the data bus 42 is in use, the bus master 30 continues outputting the REQOUT signal.

When the data bus is no longer in use, the bus master 30 releases the data bus 42 and withdraws the REQOUT signal.

### (E) Monitoring for Request to Use Data Bus

Subsequently, the monitor 46 monitors signals REQ3 to REQ0 on the arbitration bus 43. If another bus master issues any of signals REQ3 to REQ0, the monitor 46 brings its own bus master 30 into a neutral state. In that case, the monitor 46 forces its own bus master 30 to enter the neutral state even if one of the signals among REQ3 to REQ0 has a lower priority than that of the bus master 30's own REQOUT signal.

If the request to use the bus is issued from the bus master 30 itself before any other bus masters, the bus master 30 uses the bus again.

### (F) Reuse of Bus

When reusing the data bus 42, the bus master 30 activates the REQOUT signal to immediately acquire the right to use the data bus. More specifically, the bus master immediately acquires the right without going through the arbitration procedure using the arbitration bus 43.

This saves any wasteful arbitration time. When the bus master 30 finishes using the data bus 42, it releases the data bus and then withdraws the REQOUT signal to monitor for requests to use the data bus. That is, the bus master moves to the condition described in item (E).

Figure 21 is a schematic representation of the behavior of the embodiment of Figure 19.

In the embodiment of Figure 21, a master station 32 uses a data bus 42 in two consecutive rounds. If there is no request issued by other bus masters to use the data bus when the master station 32 uses the data bus the second time, the master station immediately acquires the right to use the data bus without going through the arbitration procedure.

This saves any wasteful arbitration time.

According to embodiment 5, any given bus master is permitted to acquire the right to use the data bus without going through the arbitration procedure using the arbitration bus, if in a case where the bus master uses the data bus again, no arbitration is carried out after the bus master has finished using the data bus. Subsequently, it is possible to save any wasteful arbitration time and improve system performance.

The advantages of this embodiment are particularly remarkable in cases where a particular bus master uses the bus very frequently.

As described above by referring to embodiments 1 to 5, according to the present invention, it is possible to carry out communication without being aware of the state of a dual-redundant bus, examine the integrity of data also in areas other than the bus, and implement a communication system and a communication control method that ensure high-speed, highly reliable communication.

## Claims

1. In a communication system wherein a master station and a slave station are connected using two redundant buses and communication between these stations is controlled,
a communication unit for simultaneously sending out command frames having the same content from the master station to both of the redundant buses; and
a communication procedure control unit for verifying the conformity between the contents of two command frames received by the slave station through the two redundant buses, and then selecting from among processes depending on the result of verification.

2. In a communication system wherein a master station and a slave station are connected using two redundant buses and communication between these stations is controlled,
a communication unit for simultaneously sending out command frames having the same content from the master station to both of the redundant buses, wherein the communication unit adds check bits to the command frames; and
a communication procedure control unit for performing a test of valid data transfer using the check bits, on the contents of two command frames received by the slave station through the two redundant buses, verifying the conformity between the contents of the two command frames, and then selecting from among processes depending on the result of verification.

3. In a communication system wherein a master station and a slave station are connected using two redundant buses and communication between these stations is controlled,
a processor for controlling the master station as a whole; a first communication unit for simultaneously sending out command frames having the same content from the master station to both of the redundant buses, wherein the communication unit adds check bits to the command frames; and
a first communication procedure control unit for performing a test of valid data transfer using the check bits, on the contents of two command frames received by the slave station through the two redundant buses, verifying the conformity between the contents of the two command frames, and then selecting a process, depending on the result of verification, from among processes including:
[1] a process wherein, if command frames judged to be normal by means of the check bits are received through both buses and the contents of the received two command frames match, the communication procedure control unit acts as instructed by the command and returns normal-end responses having the same content to both buses;
[2] a process wherein, if a command frame judged to be normal by means of the check bits is received through either bus, the communication procedure control unit acts as instructed by the command and returns a normal-end response to only the bus that received the command frame;
[3] a process wherein, if command frames judged to be normal by means of the check bits are received through both buses but the contents of the received two command frames do not match, the communication procedure control unit ignores the commands and returns abnormal-end responses having the same content to both buses; and
[4] a process wherein, if a command frame judged to be normal by means of the check bits is not received through either of the buses, the communication procedure control unit does not return any response to either of the buses.

4. A communication system as defined in claim 3 comprising:
a second communication unit for sending out response frames from a slave station to two redundant buses, wherein the communication unit adds check bits to the response frames; and
a second communication procedure control unit for monitoring responses from the slave station and then selecting the next process, depending on the results of monitoring, from among processes including:
[1] a process wherein, if response frames judged to be normal by means of check bits are received through both buses and are normal-end responses whose contents match, the communication procedure control unit informs said processor of the normal end of access;
[2] a process wherein, if a response frame judged to be normal by means of check bits is received through either of the buses and the content of the received response frame is a normal-end response, the communication procedure control unit informs said processor of the normal end of access;
[3] a process wherein, if response frames judged to be normal by means of check bits are received through both buses and the contents of the received two response frames do not match; or if response frames judged to be normal by means of check bits are received through both buses and are abnormal-end responses whose contents match; or if a response frame judged to be normal by means of check bits is received through either of the buses and the content of the received response frame is an abnormal-end response, then the communication procedure control unit informs said processor of the abnormal end of access; and
[4] a process wherein, if a response frame judged to be normal by means of check bits is not received through either of the buses, the communication procedure control unit informs said processor of the abnormal end of access.

5. A communication system as defined in claim 4 comprising an annunciator for informing said processor of which case, among said processes (1) to (4), the access to the slave station belonged to before it ended.

6. A communication control method wherein a master station and a slave station are connected using two redundant buses and communication between these stations is controlled, wherein command frames having the same content are simultaneously sent out from the master station to both of the redundant buses, check bits are added to the command frames, the command frames sent through the two redundant buses are received by the slave station, a test of valid data transfer is performed using the check bits to verify if the contents of the received two command frames match, and, depending on the result of verification, a process is selected from among processes including:
[1] a process wherein, if command frames judged to be normal by means of the check bits are received through both buses and the contents of the received two command frames match, the communication control method acts as instructed by the command and returns normal-end responses having the same content to both buses;
[2] a process wherein, if a command frame judged to be normal by means of the check bits is received through either bus, the communication control method acts as instructed by the command and returns a normal-end response to only the bus that received the command frame;
[3] a process wherein, if command frames judged to be normal by means of the check bits are received through both buses but the contents of the received two command frames do not match, the communication control method ignores the commands and returns abnormal-end responses having the same content to both buses; and
[4] a process wherein, if a command frame judged to be normal by means of the check bits is not received through either of the buses, the communication control method does not return any response to either of the buses.

7. A communication control method as defined in claim 6 wherein response frames, to which check bits are added, are sent out from the slave station to the two redundant buses and the master station monitors responses from the slave station, and then selects a process, depending on the result of monitoring, from among processes including:
[1] a process wherein, if response frames judged to be normal by means of the check bits are received through both buses and are normal-end responses whose contents match, the communication control method informs the master station's processor of the normal end of access;
[2] a process wherein, if a response frame judged to be normal by means of check bits is received through either of the buses and it is a normal-end response, the communication control method informs said processor of the normal end of access;
[3] a process wherein, if response frames judged to be normal by means of check bits are received through both buses and the contents of the received two response frames do not match, if response frames judged to be normal by means of check bits are received through both buses and they are abnormal-end responses whose contents match, or if a response frame judged to be normal by means of check bits is received through either of the buses and the content of the received response frame is an abnormal-end response, then the communication control method informs said processor of the abnormal end of access; and
[4] a process wherein, if a response frame judged to be normal by means of the check bits is not received through either of the buses, the communication control method informs said processor of the abnormal end of access.

8. A communication control method as defined in claim 7 for informing said processor of which case, among said processes (1) to (4), the access to the slave station belonged to before it ended.

9. A communication system wherein a plurality of units is connected to a bus in a multidrop configuration and communication between the units is carried out through the bus whose line length satisfies the following conditional formula:
(Transition time of a transmission signal on bus) < (Time required for the transmission signal to make a round trip between two units with the shortest communication path)

10. A communication system as defined in claim 9 wherein said bus is structured in a zigzag wiring pattern on a printed wire board.

11. A communication system, wherein a bus for transferring a plurality of signals is installed, a plurality of units is connected to the bus, and a plurality of signals is sent out from a driver IC in the transmitter circuit of each unit to the bus, comprising:
an encoder located in front of said driver IC in order to send a transmission signal to said driver IC after encoding the signal into a bit signal having a fixed number of bits; and
a decoder located in the receiver circuit of each unit in order to decode an encoded signal sent from the transmitter circuit back to the original signal.

12. A communication system, wherein transmitter and receiver circuits are connected to a transmission line forminq a bus and data is transferred between the circuits, said transmitter circuit having:
a transmitter circuit for transmitting data, and
a multi-strobe generation circuit for generating N strobe signals (N is an integer) each of which has a different timing,
and said receiver circuit having:
as many latch circuits as the number of strobe signals, i.e., N strobe signals, which successively retain data sent by said transmitter circuit at each point in time of the N strobe signals, and
a sampling circuit which samples the data retained by said latch circuits using a receiver clock having a frequency equivalent to the data transmission rate to synchronize the data with the clock.

13. A communication system, wherein bus arbitration is carried out to permit a bus master, which is incorporated in a bus master connected to a data bus and an arbitration bus and acquires the right to use the data bus after having gone through an arbitration procedure using said arbitration bus, to use said data bus, comprising:
a monitor for monitoring signals on the arbitration bus; and an arbiter which, if a request to use the data bus is issued from its own bus master, executes a process, depending on the result of monitoring, among the processes including:
[1] a process wherein, if no arbitration is carried out on the arbitration bus after the arbiter's own bus master has finished using the data bus, the arbiter acquires the right to use the data bus without going through the arbitration procedure using the arbitration bus; and
[2] a process wherein, if arbitration is carried out on the arbitration bus after the arbiter's own bus master has finished using the data bus, the arbiter acquires the right to use the data bus after having gone through the arbitration procedure using the arbitration bus.

14. A communication control method for carrying out bus arbitration to permit a bus master, which is incorporated in a bus master connected to a data bus and an arbitration bus and acquires the right to use the data bus after having gone through an arbitration procedure using said arbitration bus, to use said data bus, wherein the communication control method monitors signals on the arbitration bus and, if a request to use the data bus is issued from the arbiter's own bus master, executes a process, depending on the result of monitoring, among the processes including:
[1] a process wherein, if no arbitration is carried out on the arbitration bus after the arbiter's own bus master has finished using the data bus, the bus master acquires the right to use the data bus without going through the arbitration procedure using the arbitration bus; and
[2] a process wherein, if arbitration is carried out on the arbitration bus after the arbiter's own bus master has finished using the data bus, the bus master acquires the right to use the data bus after having gone through the arbitration procedure using the arbitration bus.
